(19) Europäisches Patentamt
European Patent Office
Office européen des brevets

(11) Publication number: **0 096 319**
**B1**

(12) **EUROPEAN PATENT SPECIFICATION**

(45) Date of publication of patent specification: **26.03.86**

(51) Int. Cl.$^4$: **C 08 F 2/00**

(21) Application number: **83105292.3**

(22) Date of filing: **27.05.83**

# (54) Method for preventing scale deposition in the polymerization of ethylenically unsaturated monomers.

(30) Priority: **31.05.82 JP 92415/82**

(43) Date of publication of application:
**21.12.83 Bulletin 83/51**

(45) Publication of the grant of the patent:
**26.03.86 Bulletin 86/13**

(84) Designated Contracting States:
**BE DE FR GB IT NL**

(56) References cited:
**EP-A-0 000 166**
**FR-A-2 305 499**
**FR-A-2 457 168**
**GB-A-1 536 160**

(73) Proprietor: **Shin-Etsu Chemical Co., Ltd.**
**6-1, Ohtemachi 2-chome**
**Chiyoda-ku Tokyo 100 (JP)**

(72) Inventor: **Shimizu, Toshihide**
**3-3 Tomioka**
**Urayasu-shi Chiba-ken (JP)**
Inventor: **Furukawa, Yasuo**
**5-2-23, Chuo**
**Joetsu-shi Niigata-ken (JP)**
Inventor: **Kaneko, Ichiro**
**Doai-Shataku 1-308 9809-7, Yatabe**
**Hazaki-cho Kashima-gun Ibaraki-ken (JP)**

(74) Representative: **Jaeger, Klaus, Dr. et al**
**JAEGER & PARTNER Patentanwälte**
**Bergstrasse 48 1/2**
**D-8035 München-Gauting (DE)**

**EP 0 096 319 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

Background of the Invention

The present invention relates to a method for preventing deposition of polymer scale on the reactor walls in the polymerization of an ethylenically unsaturated monomer.

As is known, polymerization of ethylenically unsaturated monomers is performed in several types of polymerization procedures including suspension polymerization, emulsion polymerization, solution polymerization, gas-phase polymerization, bulk polymerization and the like and one of the most serious problems common to these polymerization methods is the deposition of polymer scale on the surfaces of reactor walls and other parts coming into contact with the monomer such as the stirrer blades.

That is, in the polymerization of an ethylenically unsaturated monomer by the above mentioned method, polymer scale is more or less deposited on the surface of the inner walls of the polymerization reactor and other parts coming into contact with the monomer such as stirrer so that various disadvantages are caused. For example, the yield of the polymer product is decreased naturally by the amount of the polymer scale and the cooling efficiency of the polymerization reactor is decreased resulting in decreased capacity of the polymerization facilities. Further, the quality of the polymer product is sometimes degraded due to the polymer scale eventually coming off the reactor walls and intermixed with the product. In addition, the polymer scale deposited on the reactor walls can be removed to prepare for the next run of the polymerization only by taking a great deal of time and labor while such a work for removing the polymer scale involves a very serious problem on the worker's health due to the unreacted monomer absorbed in the polymer scale which is more or less toxic as is the case with vinyl chloride of which the toxicity is of important public concern in recent years.

Various attempts have of course been proposed for preventing deposition of such polymer scale in the polymerization of an ethylenically unsaturated monomer. Most of the proposed methods consist in providing a coating layer of a specific compound on the reactor walls prior to the introduction of the polymerization mixture into the reactor. Examples of the proposed coating materials include polar organic compounds such as amine compounds, quinone compounds, aldehyde compounds and the like or dyes and pigments (see, for example, Japanese Patent Publications 45—30343 and 45—30835), polar organic compounds or dyes treated in advance with a metal salt (see Japanese Patent Publication 52—24953), mixtures of an electron donor compound and an electron acceptor compound (see Japanese Patent Publication 53—28347) and inorganic salts or complex compounds (see Japanese Patent Publication 52—24070).

The prior art methods of providing a coating layer with the above named compounds are indeed effective for remarkably decreasing the amount of polymer scale deposited on the reactor walls when the polymerization of the monomer is undertaken by use of a free radical polymerization initiator which is an azo compound or an organic peroxide having a long-chain alkyl group as the organic group, which is soluble in the monomer but almost insoluble in water. These coating materials are, however, poorly effective or almost ineffective in several cases including the suspension polymerization of vinyl chloride by use of a polymerization initiator which is an organic peroxide soluble in the monomer but in the same time having a relatively high solubility in water of at least 0.2% by weight at 20°C desirably used in consideration of the superior quality of the polymer product and the polymerization of styrene or copolymerization of styrene with comonomers such as butadiene, acrylonitrile and the like. Limiting the subject matter to the suspension polymerization of vinyl chloride, the use of a monomer-soluble peroxide initiator having a relatively high, e.g. at least 0.2% by weight, solubility in water at 20°C is highly desirable, as is mentioned above, due to the superior quality of the polymer product obtained therewith. That is, the polyvinyl chloride resin prepared by use of such an organic peroxide initiator is excellent in respect of the good heat stability and absence of initial coloring in the shaping process. Therefore, it is a very important technical problem to develop a method for preventing polymer scale deposition effective even in the suspension polymerization of vinyl chloride by use of the organic peroxide as mentioned above as the polymerization initiator.

Summary of the Invention

It is therefore an object of the present invention to provide a novel and improved method for preventing polymer scale deposition on the reactor walls effective even in the suspension polymerization of vinyl chloride by use of a polymerization initiator which is an organic peroxide soluble in monomer but having a relatively high solubility in water of at least 0.2% by weight at 20°C.

The method of the present invention for preventing polymer scale deposition on the reactor walls in the polymerization of an ethylenically unsaturated monomer comprises coating the surfaces of the reactor walls and other parts coming into contact with the monomer with an aqueous coating composition comprising

(I) at least one compound selected from the class consisting of

(Ia) organic dyes of sulfonic acid type or carboxylic acid type in the form of an alkali metal salt or an ammonium salt,

(Ib) alkali metal salts or ammonium salts of organic sulfonic acids or carboxylic acids having at least one pair of conjugated double bonds in a molecule,

(Ic) alkali metal salts or ammonium salts of the sulfonated products obtained by the sulfonation of a

condensation product of an aromatic amine compound or a cocondensation product of an aromatic amine compound and an aromatic nitro compound, and

(Id) anionic polymeric electrolyte compounds, and

(II) an aqueous colloidal dispersion of an inorganic material,

and then drying the thus coated surface prior to the introduction of the polymerization mixture into the polymerization reactor.

The effectiveness of the above coating treatment may be further increased when the aqueous coating composition is admixed with a third component (III) which is reactive with the above named component (I) and selected from the class consisting of

(IIIa) organic dyes,

(IIIb) organic compounds having at least one pair of conjugated double bonds in a molecule, and

(IIIc) cationic polymeric electrolyte compounds.

The aqueous coating composition may preferably contain a limited amount of a monohydric alcohol having 3 to 6 carbon atoms per molecule as the fourth component (IV).

Detailed Description of the Preferred Embodiments

The above described method of the present invention is highly effective in preventing polymer scale deposition on the surfaces of the inner walls of the polymerization reactor and other parts coming into contact with the monomer during polymerization such as the stirrer blades, stirrer shaft and the like and the effectiveness of the method is free from the limitations by the kind of the monomer, type of the polymerization procedure, e.g. suspension polymerization, emulsion polymerization and bulk polymerization, material of the polymerization reactor and other parts which may be stainless steel or have a glass-lined surface, formulation of the polymerization mixture, type of the polymerization initiator and other factors. Therefore, the present invention provides a promising means for the industrialization of a polymerization process which has not been practiced due to the limitation by the problem of the polymer scale deposition. For example, certain polymerization processes hitherto practiced only in a glass-lined polymerization reactor can be performed in a stainless steel-made reactor which is more suitable for the industrial process of polymerization but more susceptible to the deposition of polymer scale thereon than the glass-lined reactors.

In connection with the suspension polymerization of vinyl chloride, in particular, the polymerization can be performed according to the invention without the disadvantage of polymer scale deposition even by the use of the monomer-soluble organic peroxide initiator having a relatively high solubility in water which is desirable to use in respect of the superior quality of the polymer product, i.e. remarkably decreased number of fish-eyes, excellent heat stability and absence of initial coloring in the shaping process, but could not be industrially used owing to the drawback of too much polymer scale deposition when polymerization is performed by use of such a polymerization initiator.

The mechanism of the unexpectedly high effectiveness exhibited by the inventive method without limitations by various factors is presumably as follows. That is, the component (I) contained as dissolved in the aqueous coating composition becomes insoluble or hardly soluble in water once dried on the reactor walls to firmly adhere to the surface and the hydrophilicity of the coating layer may be remarkably increased by the synergism with the inorganic colloidal component (II) so that the monomer-soluble organic peroxide partly dissolved in the aqueous medium is prevented from being adsorbed on the surface to cause oxidative decomposition of the coating layer with consequent decrease in the scale preventing effect.

In the following, the method of the present invention is described in detail beginning with the description of the respective components in the aqueous coating composition.

In the first place, the component (I) may be either one or a combination of the compounds belonging to the classes (Ia) to (Id) as mentioned above. The compound of the class (Ia) is an organic dye of sulfonic acid type or carboxylic acid type in the form of an alkali metal salt or an ammonium salt as exemplified by: C.I. Direct Yellow 1, C.I. Acid Yellow 38, C.I. Acid Yellow 3, C.I. Reactive Yellow 3, C.I. Direct Orange 2, C.I. Acid Blue 102, C.I. Direct Orange 10, C.I. Direct Red 18, C.I. Acid Red 52, C.I. Acid Red 73, C.I. Direct Red 186, C.I. Direct Red 92, C.I. Direct Violet 1, C.I. Direct Violet 22, C.I. Acid Red 18, C.I. Acid Violet 11, C.I. Acid Violet 78, C.I. Mordant Violet 5, C.I. Direct Blue 6, C.I. Direct Blue 71, C.I. Direct Blue 106, C.I. Reactive Blue 2, C.I. Reactive Blue 4, C.I. Reactive Blue 18, C.I. Acid Blue 116, C.I. Acid Blue 158, C.I. Mordant Blue 1, C.I. Mordant Black 1, C.I. Mordant Black 5, C.I. Acid Black 2, C.I. Direct Black 38, C.I. Solubilized Vat Black 1, C.I. Fluorescent Brightening Agent 30, C.I. Fluorescent Brightening Agent 32, C.I. Azoic Brown 2 and the like.

The compound belonging to the class (Ib) is an alkali metal salt or an ammonium salt of an organic sulfonic acid or carboxylic acid having at least one pair of conjugated double bonds in a molecule as exemplified by the alkali metal, e.g. sodium or potassium, salt or ammonium salt of α-naphthalene sulfonic acid, anthraquinone sulfonic acid, metanilic acid, cyclohexane sulfonic acid, dodecylbenzene sulfonic acid, p-toluene sulfonic acid, abietic acid, isonicotinic acid, benzoic acid, phenyl glycine, 3-hydroxy-2-naphthoic acid and the like.

The compound belonging to the class (Ic) is an alkali metal, e.g. sodium or potassium, salt or an ammonium salt of a sulfonated product obtained by the sulfonation of a condensation product of an

aromatic amine compound or a cocondensation product of an aromatic amine compound and an aromatic nitro compound and the method for the preparation thereof is as follows.

The aromatic amine compound as the starting compound of this component (Ic) is represented by the general formula

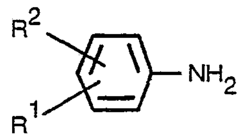

(I)

in which $R^1$ is an atom or group selected from the class consisting of $—H$, $—NH_2$, $—Cl$, $—N=N—C_6H_5$, $—OH$, $—COCH_3$, $—OCH_3$, $—NH—C_6H_5$, $—NH—C_6H_4—NH_2$, $—NH—C_6H_4—OCH_3$, $—N(CH_3)_2$, $—NH—C_6H_4—OH$ and alkyl groups having 1 to 3 carbon atoms and $R^2$ is an atom or group selected from the class consisting of $—H$, $—NH_2$, $—OH$ and $—CH_3$. The aromatic amine compounds in conformity with the above definition include, for example, aniline, 1,2-, 1,3- and 1,4-phenylene diamines, 2-, 3- and 4-aminophenols, 2-, 3- and 4-chloroanilines, 4-amino azobenzene, 2,4-diamino azobenzene, 4-amino acetanilide, 2-, 3- and 4-methyl anilines, 4-amino diphenyl amine, 2-amino diphenyl amine, 4,4′-diamino diphenyl amine, N,N-dimethyl-1,4-phenylene diamine, 4-amino-4′-hydroxy diphenylamine, 4-chloro-1,2-phenylene diamine, 4-methoxy-1,2-phenylene diamine, 2-amino-4-chlorophenol, 2,3-diamino toluene and the like.

Further, the aromatic nitro compound which may be reacted with the above named aromatic amine compound according to need to give a cocondensation product is represented by the general formula

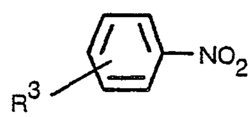

(II)

in which $R^3$ is an atom or group selected from the class consisting of $—H$, $—OH$, $—OCH_3$, $—OC_2H_5$, $—Cl$, $—NH_2$, $—COOH$ and $—SO_3H$.

The aromatic nitro compounds in conformity with the above definition include, for example, nitrobenzene, 2-, 3- and 4-hydroxy nitrobenzenes, 2-, 3- and 4-nitro anisoles, 2-, 3- and 4-nitro phenetoles, 2-, 3- and 4-chloro nitrobenzenes, 2-, 3- and 4-amino nitrobenzenes, 2-, 3- and 4-nitro benzoic acids, 2-, 3- and 4-nitro benzene sulfonic acids and the like.

The condensation reaction of the above named aromatic amino compound or the cocondensation reaction of the aromatic amine compound and the aromatic nitro compound is performed in the presence of a mineral acid such as hydrochloric, hydrobromic, nitric, phosphoric and sulfuric acids and a condensation catalyst exemplified by permanganic acid and salts thereof, chromic acid and related compounds such as chrominum trioxide, potassium dichromate, sodium chlorochromate and the like, nitrates such as silver nitrate and lead nitrate, halogens such as iodine, bromine, chlorine and fluorine, peroxides such as hydrogen peroxide, sodium peroxide, benzoyl peroxide, potassium persulfate, ammonium persulfate, peracetic acid, cumene hydroperoxide, perbenzoic acid, p-menthane hydroperoxide and the like, oxyacids and salts thereof such as iodic acid, potassium iodate, sodium chlorate and the like, metal salts such as iron (II) chloride, iron (III) chloride, iron (II) sulfate, copper sulfate, copper (I) chloride, copper (II) chloride, lead acetate and the like, oxygen and ozone, and metal oxides such as copper oxide, mercury oxide, ceric oxide, manganese dioxide, osmic acid and the like. When oxygen is used as the catalyst, the reaction is performed by blowing air or oxygen into the reaction mixture.

The aromatic amine compound is subjected to the condensation reaction in the presence of the above mentioned mineral acid and the condensation catalyst at a temperature of −5 to 100°C for 5 to 70 hours to give a condensation product. The amount of the mineral acid and the condensation catalyst should preferably be in the ranges from 0.5 to 5 moles and from 0.01 to 0.5 mole, respectively, per mole of the aromatic amine compound and the nature of the condensation product is influenced by the kinds and amounts of the mineral acid and condensation catalyst as well as by the reaction conditions such as the temperature and time of the reaction.

When the aromatic amine compound and the aromatic nitro compound are subjected to the cocondensation reaction, a mixture of them with admixture of the mineral acid and the condensation catalyst is heated at a temperature of 100 to 250°C for 10 to 30 hours. The amount of the aromatic nitro compound should preferably be in the range from 0.15 to 0.50 mole per mole of the aromatic amine compound. When the amount of the aromatic nitro compound is in excess of the above upper limit, the effectiveness of the resultant coating composition may be somewhat reduced while no significant improvement can be obtained by the cocondensation of the nitro compound when the amount thereof is too small. The amounts of the mineral acid and the condensation catalyst should preferably be in the ranges from 0.20 to 0.50 mole and from 0.03 to 0.50 mole, respectively, per mole of the aromatic amine compound. An alternative way for the preparation of the cocondensation product of the aromatic amine compound and the aromatic nitro compound is to first perform the condensation reaction of the aromatic

amine compound alone in the presence of the mineral acid and the condensation catalyst to give a condensation product thereof which is then subjected to further condensation reaction with the aromatic nitro compound.

The above obtained (co)condensation product is then subjected to the sulfonation reaction which may be performed according to a known procedure, for example, at a temperature in the range from 35 to 90°C by use of a sulfonating agent such as concentrated or fuming sulfuric acid, chlorosulfonic acid and the like in an amount of 2 to 15 times by weight of the (co)condensation product.

Neutralization of the thus obtained sulfonation product with an alkali or an ammonium compound gives the desired compound belonging to the class (Ic). This neutralization reaction is performed by dispersing the sulfonated (co)condensation product in water under heating followed by the addition of a calculated amount of an alkaline or ammonium compound such as sodium hydroxide, potassium hydroxide, sodium carbonate, ammonia water, ammonium carbonate and the like. The thus formed salt is soluble in water so that the compound (Ic) is obtained in the form of an aqueous solution which may be used as such by blending with the other components of the aqueous coating composition. It is of course optional that the aqueous solution of the component (Ic) is dehydrated into a solid and pulverized into a powdery form in consideration of the convenience in the storage and transportation.

The compound belonging to the class (Id) is an anionic polymeric electrolyte compound exemplified by sulfomethylation products of polyacrylamide, sodium polyacrylates, sodium alginate, sodium polymethacrylate, sodium polystyrene sulfonate, sodium carboxymethyl cellulose and the like polymer having sulfoxyl or carboxyl groups as the pendant groups converted to the salt form with alkali metal or ammonium ions.

The second essential component (II) in the aqueous coating composition used in the inventive method is an aqueous colloidal dispersion of an inorganic material such as gold, silver, sulfur, iron (III) hydroxide, stannic acid, silicic acid, manganese dioxide, molybdenum oxide, barium sulfate, vanadium pentoxide, aluminum hydroxide, lithium silicate and the like having a particle size distribution of 1 to 500 nm. Such a colloidal dispersion can be obtained by a known method involving mechanical pulverization, irradiation with ultrasonic waves and electric dispersing means as well as chemical methods.

Besides the above described essential components (I) and (II), the aqueous coating composition used in the inventive method preferably further contains a third component (III) which is a compound reactive with the component (I) and selected from the compounds belonging to the classes (IIIa) to (IIIc). These compounds have a cationically active structure in the molecule and admixture of such a compound in the aqueous coating composition used in the inventive method has an effect to increase the adhesion of the coating layer to the surface of the reactor walls and also to increase the strength of the coating layer per se.

The compound belonging to the class (IIIa) is an organic dye exemplified by C.I. Basic Red 2, C.I. Basic Blue 16, C.I. Basic Black 2, C.I. Basic Orange 14, C.I. Basic Orange 15, C.I. Basic Blue 1, C.I. Basic Violet 3, C.I. Basic Blue 26, C.I. Basic Violet 14, C.I. Basic Blue 5, C.I. Basic Blue 7, C.I. Basic Blue 9, C.I. Basic Yellow 1, C.I. Basic Blue 24, C.I. Basic Blue 25, C.I. Basic Green 5, C.I. Basic Red 12, C.I. Basic Yellow 11, C.I. Basic Yellow 2, C.I. Basic Violet 10, C.I. Basic Red 1, C.I. Basic Blue 26, C.I. Basic Brown 1, C.I. Basic Orange 2, C.I. Basic Blue 12, C.I. Basic Blue 6, C.I. Solvent Red 49, C.I. Solvent Yellow 2, C.I. Solvent Yellow 6, C.I. Solvent Yellow 16, C.I. Solvent Red 109, C.I. Solvent Blue 2, C.I. Solvent Blue 55, C.I. Solvent Blue 73, C.I. Solvent Black 3, C.I. Solvent Orange 14, C.I. Solvent Black 5, C.I. Solvent Black 7 and the like.

The compound belonging to the class (IIIb) is an organic compound having at least one pair of conjugated double bonds in a molecule exemplified by aniline hydrochloride, 3-(2-aminoethyl) pyrocatechol hydrochloride, 2-amino-4-methyl thiazole hydrochloride, 4-aminoresorcine hydrochloride, N-ethyl aniline hydrochloride, 2-chloro-1,4-phenylene diamine hydrochloride, 2,4-diamino azobenzene hydrochloride, 2,4-diaminophenol hydrochloride, 2-aminoresorcine hydrochloride, thiamine hydrochloride, N,N-diethylaniline hydrochloride, 4-methyl aniline hydrochloride, thionine hydrochloride and the like hydrochlorides of aromatic amine compounds.

The compound belonging to the class (IIIc) is a cationic polymeric electrolyte compound having one or more of positively charged nitrogen atoms in the pendant groups exemplified by polyethylene imines, polyvinyl amines, polyacrylamides, copolymers of N-vinyl-2-pyrrolidone and acrylamide, cyclized polymers of dimethyl diamyl ammonium chloride, cyclized polymers of dimethyl diethyl ammonium bromide, cyclized polymers of diallyl amine hydrochloride, cyclized copolymers of dimethyl diallyl ammonium chloride and sulfur dioxide, polyvinyl pyridines, polyvinyl pyrrolidones, polyvinyl carbazoles, polyvinyl imidazolines, polydimethylaminoethyl acrylates, polydimethylaminoethyl methacrylate, polydiethylaminoethyl acrylates, polydiethylaminoethyl methacrylates and the like.

Although any combinations of the components (I), (II) and, optionally, (III) may be effective in the aqueous coating composition used in the inventive method, best results can be expected when the aqueous coating composition contains the components (Ia), (II) and (IIIa) in respect of the scale preventing effect.

In practising the method of the present invention, an aqueous coating composition should be prepared to be used for providing a coating layer on the surfaces of the reactor walls and the like. Such an aqueous coating composition is prepared, for example, by first dissolving the component (I) in water in a concentration of 0.01 to 5% by weight and the other components, i.e. component (II) and, optionally, components (III) and (IV), are added to the aqueous solution in suitable concentrations. The amounts of the

components (II) and (III) in the aqueous coating composition should be in the ranges from 0.1 to 1000 parts by weight or, preferably, from 5 to 400 parts by weight and from 5 to 100 parts by weight or, preferably, from 15 to 50 parts by weight, respectively, per 100 parts by weight of the component (I) in order to obtain satisfactory results of polymer scale prevention. The order in which these components are added to the aqueous solution of the component (I) is not particularly limitative. It is even optional that the components (II) and (III) are added to water simultaneously with the component (I). If desired, the component (III) is dissolved in advance in an organic solvent freely miscible with water such as lower alcohols, e.g. methyl and ethyl alcohols, and ketones, e.g. acetone, before it is added to the aqueous coating composition.

As is suggested in the above, the aqueous coating composition may be prepared not only by use of water alone as the solvent but also by the combined use of an organic solvent freely miscible with water such as lower alcohols, esters and ketones. The use of such an organic solvent in the aqueous coating composition is advantageous because the drying velocity of the composition after coating of the reactor walls is greatly increased so that the drying procedure after coating may be performed even at room temperature without heating.

In addition to the above described components, the aqueous coating composition used in the inventive method may further contain a fourth component (IV) with an object to improve the spreadability of the composition over the surface under treatment which is made, in particular, of stainless steel. Preferable examples of such a spreadability improver are monohydric alcohols having 3 to 6 carbon atoms per molecule exemplified by n-propyl alcohol, isopropyl alcohol, n-butyl alcohol, isobutyl alcohol, sec-butyl alcohol, tert-butyl alcohol, n-amyl alcohol, tert-amyl alcohol, iso-amyl alcohol, sec-amyl alcohol, sec-hexyl alcohol and the like. They are used either alone or as a combination of two kinds or more according to need. The concentration of the spreadability improver in the aqueous coating composition should be, preferably, in the range from about 1 to about 20% by weight to exhibit satisfactory effects of spreadability improvement.

The aqueous coating composition prepared in the above described manner is applied to the surfaces of the inner walls of the polymerization reactor and other parts coming into contact with the monomer during polymerization followed by thorough drying to exhibit excellent effect of preventing polymer scale deposition thereon. The method for applying the coating composition to the surfaces is not limitative and any conventional method such as brush coating, spray coating and the like is applicable. It is preferable and very advantageous that the aqueous coating composition is applied to the surfaces heated in advance at an elevated temperature of, for example, 40 to 100°C to accelerate drying of the coating layer with formation of the water-in-soluble coating film within a shortened time. It is also preferable that the surfaces coated with the coating composition followed by drying are washed with water before introduction of the polymerization mixture to remove any matter possibly dissolved out into the polymerization mixture.

The amount of coating on the reactor walls and the like with the aqueous coating composition according to the invention may be about the same as in the prior art methods using conventional coating compositions. For example, a coating amount of 0.001 $g/m^2$ or more as dried may be sufficient to exhibit the desired effect of polymer scale prevention.

The method of the present invention is applicable to the polymerization of various kinds of ethylenically unsaturated monomers including vinyl halides such as vinyl chloride, vinyl esters such as vinyl acetate and vinyl propionate, acrylic and methacrylic acids and esters and salts thereof, maleic and fumaric acids and esters thereof as well as maleic anhydride, dienic monomers such as butadiene, chloroprene and isoprene, styrene, acrylonitrile, vinylidene halides, vinyl ethers and the like. Copolymerization of two or more of these monomers is of course within applicability of the inventive method.

Furthermore, the method of the present invention is free from limitations laid by the types of the polymerization and formulation of the polymerization mixture and satisfactory effect of polymer scale prevention can be obtained. For example, the polymerization mixture in the suspension and emulsion polymerization of an ethylenically unsaturated monomer may contain various kinds of known additives including suspending agents such as partially saponified polyvinyl alcohol and methyl cellulose, anionic surface active agents such as sodium laurylsulfate, sodium dodecylbenzene sulfonate and sodium dioctylsulfosuccinate, non-ionic surface active agents such as sorbitan monolaurate and polyoxyethylene alkyl ethers, inorganic fillers such as calcium carbonate and titanium dioxide, stabilizers such as tribasic lead sulfate, calcium stearate, dibutyltin dilaurate and dioctyltin mercaptide, lubricants such as rice wax and stearic acid, plasticizers such as dioctyl phthalate and dibutyl phthalate, chain transfer agents such as trichloroethylene and mercaptan compounds, pH controlling agents and the like without noticeably affecting the effect of polymer scale prevention.

In the next place, the effectiveness of the inventive method for the prevention of polymer scale deposition is described in connection with the type of the polymerization initiator used in the polymerization reaction. As is mentioned before, the method of the present invention is effective relatively invariably irrespective of the type of the polymerization initiator.

As is well known, free radical-initiated polymerization of ethylenically unsaturated monomers is performed by use of a polymerization initiator which is usually a peroxide compound or an azo compound exemplified, for example, by lauroyl peroxide, cumene hydroperoxide, p-menthane hydroperoxide, 3,5,5-trimethylhexanoyl peroxide, diisopropylperoxy dicarbonate, di-2-ethylhexylperoxy dicarbonate, di-2-ethoxyethylperoxy dicarbonate, bis-3-methoxybutyl methyl peroxy dicarbonate, tert-butylperoxy pivalate,

cumylperoxy neodecanoate, acetyl cyclohexylsulfonyl peroxide, azobisisobutyronitrile, azobis-2,4-dimethyl valeronitrile, potassium persulfate and the like.

Limiting the subject matter to the suspension polymerization of vinyl chloride in an aqueous medium, the most widely used peroxide initiators are those soluble in the monomer and having an extremely low solubility in water such as di-2-ethylhexylperoxy dicarbonate, 3,5,5-trimethylhexanoyl peroxide, α-cumylperoxy neodecanoate and the like. These polymerization initiators are, although they are advantageous at least in connection with the problem of polymer-scale deposition since the conventional methods for the polymer scale prevention are considerably effective in the polymerization undertaken with these initiators, not quite satisfactory in respect of the quality of the polymer products obtained therewith having relatively poor heat stability to cause initial coloring in the process of fabrication. On the other hand, those monomer-soluble peroxide initiators having a relatively high solubility in water of, for example, 0.2% by weight or larger at 20°C, such as di-2-ethoxyethylperoxy dicarbonate, bis-3-methoxybutylperoxy dicarbonate and the like, are preferred in respect of the product quality obtained therewith but they are not widely used in the prior art for the industrial suspension polymerization of vinyl chloride solely due to the problem of very heavy polymer scale deposition unsurmountable by the conventional methods for the polymer scale prevention. Contrary to the conventional methods, the inventive method is quite effective for preventing polymer scale deposition even in the suspension polymerization of vinyl chloride by use of such a monomer-soluble peroxide having a relatively high solubility in water as the polymerization initiator.

The types of the polymerization of ethylenically unsaturated monomers, in which best results of polymer scale prevention can be expected by the application of the inventive method, include preparation of polymers of vinyl halides such as vinyl chloride or copolymers mainly composed of vinyl chloride with other comonomers such as vinyl acetate by the suspension or emulsion polymerization, preparation of beads and latexes of polystyrene, polymethyl methacrylate, polyacrylonitrile and the like, preparation of synthetic rubbers such as SBR, NBR, CR, IR, IIR and the like by emulsion polymerization and preparation of ABS resins.

In the following, examples are given to illustrate the method of the present invention in further detail. The experiments of the polymerization undertaken in these examples were performed by use of the organic peroxides as the polymerization initiator as listed below together with the respective abbreviated denotation used hereinafter and solubility in water at 20°C given in % by weight as determined by the iodometric titration of the aqueous solution obtained by the centrifugal separation of the aqueous dispersion of the respective organic peroxide equilibrated by shaking at 20°C.

| Organic peroxide | Denotation | Solubility |
|---|---|---|
| Di-2-ethylhexylperoxy dicarbonate | OPP | 0.04 |
| Lauroyl peroxide | LPO | 0.003 |
| 3,5,5-Trimethylhexanoyl peroxide | L—355 | 0.05 |
| α-Cumylperoxy neodecanoate | L—188 | 0.01 |
| Di-2-ethoxyethylperoxy dicarbonate | EEP | 0.41 |
| Bis-3-methoxybutylperoxy dicarbonate | MPC | 0.24 |
| Dibuthoxyethylperoxy dicarbonate | BEP | 0.21 |

In the following examples, the polymer products were evaluated by the determination of the number of fisheyes and the heat stability undertaken in the following manner.

Determination of fisheyes: a resin compound composed of 100 parts by weight of the polymer product under testing, 50 parts by weight of dioctyl phthalate, 1 part by weight of dibutyltin dilaurate, 1 part by weight of cetyl alcohol, 0.25 part by weight of titanium dioxide and 0.05 part by weight of carbon black was milled for 7 minutes in a two-roller mill at 150°C and shaped into a sheet of 0.2 mm thickness, of which the number of fisheyes in 100 $cm^2$ area was counted visually under transmission of light.

Determination of heat stability: a resin compound composed of 100 parts by weight of the polymer product under testing, 1 part by weight of dibutyltin maleate and 1 part by weight of stearic acid was milled for 10 minutes in a two-roller mill with a roller gap of 0.7 mm at 170°C and shaped into a sheet of 0.7 mm thickness as the test piece which was heated in a Geer's oven at 180°C to determine the time in minutes taken for blackening of the test specimen.

Example 1. (Experiments No. 1 to No. 37)

A stainless steel-made polymerization reactor of 1000 liter capacity was coated on the surfaces of the inner walls and the stirrer coming into contact with the monomer during polymerization with an aqueous coating composition indicated below and the coated surface was dried by heating at 90°C for 10 minutes followed by washing with water. The coating amount was 0.2 $g/m^2$ as dried. The formulation of each of the aqueous coating compositions used in the experiments was as follows.

Coating composition I: an aqueous solution of C.I. Acid Black 2 in a concentration of 0.5% by weight

Coating composition II: an aqueous solution of C.I. Acid Black 2 in a concentration of 0.5% by weight having a pH of 2.5 as adjusted by use of sulfuric acid

Coating composition III: an aqueous dispersion of colloidal iron (III) hydroxide in a concentration of 0.5% by weight

Coating composition IV: an aqueous dispersion of colloidal sulfur in a concentration of 0.5% by weight

Coating composition V: an aqueous solution of C.I. Acid Black 2 in a concentration of 0.5% by weight containing colloidal iron (III) hydroxide in a concentration of 1.0% by weight

Coating composition VI: an aqueous solution of C.I. Acid Blue 116 in a concentration of 0.5% by weight containing colloidal sulfur in a concentration of 0.5% by weight

Into the thus coated and dried polymerization reactor were introduced 500 kg of water containing 150 g of a partially saponified polyvinyl alcohol and 50 g of a hydroxypropyl methylcellulose dissolved therein, an organic peroxide indicated in Table 1 below and 250 kg of vinyl chloride monomer and the polymerization was carried out at 50°C for 10 hours. The amount of the organic peroxide was 100 g for OPP, L—188, EEP, MPC and BEP and 500 g and 300 g for LPO and L—355, respectively.

After completion of the polymerization run, the aqueous polymerizate slurry was discharged out of the reactor and the amount of the polymer scale deposited on the reactor walls was examined to give the results shown in Table 1. As is clear from the results given in the table, the amount of polymer scale deposition was largely dependent on the kind of the polymerization initiator and EEP, MPC and BEP were disadvantageous in this regard to give a large amount of polymer scale deposition as is seen in Experiments No. 1 to No. 3, No. 8 to No. 10, No. 15 to No. 17 and No. 22 to No. 27 while the amount of polymer scale deposition could be greatly reduced even in the polymerization runs by use of these polymerization initiators as is seen from Experiments No. 32 to No. 37.

TABLE 1

| Experiment No. | Coating composition | Poly-merization initiator | Polymer product: Heat stability, minutes | Polymer product: Fish-eyes, pieces | Amount of scale deposition, $g/m^2$ |
|---|---|---|---|---|---|
| 1 | None | EEP | 130 | 40 | 500 |
| 2 | | MPC | 130 | 40 | 450 |
| 3 | | BEP | 130 | 35 | 350 |
| 4 | I | OPP | 100 | 28 | 200 |
| 5 | | LPO | 100 | 28 | 100 |
| 6 | | L—355 | 100 | 28 | 200 |
| 7 | | L—188 | 100 | 30 | 250 |
| 8 | | EEP | 130 | 40 | 500 |
| 9 | | MPC | 130 | 40 | 450 |
| 10 | | BEP | 130 | 35 | 350 |
| 11 | II | OPP | 100 | 5 | 0 |
| 12 | | LPO | 100 | 5 | 2 |
| 13 | | L—355 | 100 | 5 | 0 |
| 14 | | L—188 | 100 | 5 | 4 |
| 15 | | EEP | 130 | 40 | 480 |
| 16 | | MPC | 130 | 40 | 400 |
| 17 | | BEP | 130 | 35 | 300 |
| 18 | III | OPP | 100 | 28 | 200 |
| 19 | | LPO | 100 | 29 | 100 |
| 20 | | L—355 | 100 | 28 | 200 |
| 21 | | L—188 | 100 | 30 | 250 |
| 22 | | EEP | 130 | 40 | 500 |
| 23 | | MPC | 130 | 40 | 450 |
| 24 | | BEP | 130 | 35 | 350 |

TABLE 1 (Continued)

| Experiment No. | Coating composition | Poly-merization initiator | Polymer product: Heat stability, minutes | Polymer product: Fish-eyes, pieces | Amount of scale deposition, $g/m^2$ |
|---|---|---|---|---|---|
| 25 | IV | EEP | 130 | 40 | 450 |
| 26 | | MPC | 130 | 40 | 420 |
| 27 | | BEP | 130 | 35 | 330 |
| 28 | V | OPP | 100 | 5 | 0 |
| 29 | | LPO | 100 | 5 | 0 |
| 30 | | L—355 | 100 | 5 | 0 |
| 31 | | L—188 | 100 | 5 | 0 |
| 32 | | EEP | 130 | 5 | 8 |
| 33 | | MPC | 130 | 5 | 4 |
| 34 | | BEP | 130 | 5 | 6 |
| 35 | VI | EEP | 130 | 5 | 7 |
| 36 | | MPC | 130 | 5 | 3 |
| 37 | | BEP | 130 | 5 | 5 |

Example 2. (Experiments No. 38 to No. 58)

A stainless steel-made polymerization reactor of 100 liter capacity was coated on the surfaces of the inner walls and the stirrer with an aqueous coating composition containing the components I and II as indicated in Table 2 below in a total concentration of 0.5% by weight and dried by heating at 90°C for 10 minutes followed by washing with water. The coating amount was 0.1 $g/m^2$ as dried.

The component I used in Experiment No. 52 in the table was prepared in the following manner. Thus, 10 g of 4-amino diphenyl amine were dissolved in 1 liter of water acidified by adding 20 ml of 35% hydrochloric acid and the solution chilled at 0°C under agitation was further admixed successively with 78 ml of a 4.7% aqueous solution of hydrogen peroxide and 0.1 g of iron (II) sulfate to effect the condensation reaction of the amine for 24 hours at the same temperature. The precipitates formed in the reaction mixture were collected by filtration and washed with water followed by drying to give 7 g of the dried condensation product. Then, 5 g of this condensation product were admixed with 30 g of concentrated sulfuric acid at 30°C followed by temperature increase up to 80°C to effect the sulfonation reaction which was continued with agitation until the reaction mixture was rendered dissolvable rapidly and completely in a diluted ammonia water. The reaction mixture after completion of the sulfonation reaction was poured into 500 ml of water and the precipitates of the sulfonation product were collected by filtration followed by washing with water and then dispersed in 50 ml of water where they were dissolved at 90°C by adding 4.9 g of a 10% aqueous solution of sodium hydroxide. This aqueous solution was evaporated to dryness and the solid material was pulverized to give 5.5 g of a powdery sodium salt of the sulfonation product which was soluble in water.

Into the polymerization reactor thus coated and dried were introduced 40 kg of water, 17 kg of vinyl chloride monomer, 3 kg of vinyl acetate monomer, 12 g of a partially saponified polyvinyl alcohol, 4 g of a hydroxypropyl methyl cellulose, 6 g of MPC as the polymerization initiator and 200 g of trichloroethylene and, after 15 minutes of a preparatory mixing, the temperature of the polymerization mixture was increased to 58°C where the polymerization reaction was carried out for 12 hours.

After completion of each of the polymerization runs, the aqueous polymerizate slurry was discharged out of the reactor and the amount of the polymer scale deposited on the reactor walls was examined to give the results shown in Table 2.

TABLE 2

| Experiment No. | Coating composition | | | Amount of scale deposition, $g/m^2$ |
|---|---|---|---|---|
| | Component I | Component II, colloidal | (I)/(II) weight ratio | |
| 38 | None | None | — | 1800 |
| 39 | None | Iron (III) hydroxide | 0/100 | 1600 |
| 40 | None | Stannic acid | 0/100 | 1800 |
| 41 | None | Silicic acid | 0/100 | 1600 |
| 42 | None | Barium sulfate | 0/100 | 1800 |
| 43 | None | Aluminum hydroxide | 0/100 | 1700 |
| 44 | None | Vanadium pentoxide | 0/100 | 1800 |
| 45 | None | Sulfur | 0/100 | 1600 |
| 46 | None | Molybdenum oxide | 0/100 | 1800 |
| 47 | None | Silver | 0/100 | 1800 |
| 48 | C.I. Acid Black 2 | None | 100/0 | 1700 |
| 49 | C.I. Acid Black 2 | Silicic acid | 100/100 | 3 |
| 50 | Sodium anthraquinone sulfonate | Silicic acid | 100/200 | 20 |
| 51 | C.I. Acid Yellow 38 | Molybdenum oxide | 100/100 | 7 |
| 52 | (See text) | Silicic acid | 100/50 | 3 |
| 53 | C.I. Acid Red 18 | Iron (III) hydroxide | 100/300 | 7 |
| 54 | C.I. Direct Blue 6 | Silver | 100/70 | 10 |
| 55 | C.I. Direct Blue 71 | Barium sulfate | 100/400 | 5 |
| 56 | C.I. Acid Blue 116 | Stannic acid | 100/150 | 15 |
| 57 | C.I. Acid Blue 158 | Vanadium pentoxide | 100/50 | 13 |
| 58 | C.I. Direct Blue 78 | Aluminum hydroxide | 100/60 | 10 |

Example 3. (Experiments No. 59 to No. 67)

A stainless steel-made polymerization reactor of 500 liter capacity equipped with a strirrer was coated on the surfaces of the inner walls and the stirrer with an aqueous coating composition containing the components I and II indicated in Table 3 below prepared by dissolving these components in a total concentration of 1.0% by weight and then admixing with isobutyl alcohol to give a concentration of 10% by weight in the final solution and the coated surfaces were dried by heating at 90°C for 10 minutes followed by washing with water. The coating amount was 0.2 g/$m^2$ as dried.

The component I used in Experiment No. 66 in the table was prepared in the following manner. Thus, 200.0 g (2.148 moles) of aniline, 200.0 g (1.833 moles) of 4-aminophenol, 120.0 g (0.863 mole) of 2-hydroxy nitrobenzene and 138.8 g (1.332 moles as HCl) of 35% hydrochloric acid were taken in a reaction vessel and the mixture was kept at 10°C or below. This reaction mixture was then admixed dropwise with 200.0 g (0.351 mole as $K_2S_2O_8$) of a 40% by weight aqueous solution of ammonium persulfate and heated to 60°C and kept at this temperature for 6 hours followed by further temperature increase to 185°C where the condensation reaction was performed for 15 hours with agitation while the water formed by the condensation reaction was continuously removed out of the reaction mixture by distillation together with a small amount of the unreacted aniline which was recycled to the reaction vessel by separating from the condensation water. Thereafter, the temperature of the reaction mixture was further increased to 210°C to complete the reaction by keeping the mixture at this temperature for 5 hours. This reaction mixture in a molten state was poured into a diluted hydrochloric acid and heated at 60°C for 3 hours followed by filtration in a hot condition to remove the unreacted aniline and 4-aminophenol. The solid material was further washed 6 times with water to remove excess of the hydrochloric acid and dried to give 235.2 g of a condensation product. The sulfonation reaction of this condensation product was performed by mixing 50 g of the condensation product and 300 g of concentrated sulfuric acid at 30°C or below followed by temperature increase to 40°C where the mixture was agitated until the reaction mixture was rendered dissolvable rapidly and completely in a diluted ammonia water. The reaction mixture was poured into 1000 ml of water and the precipitates of the sulfonation product collected by filtration and washed with water were further dispersed in 1000 ml of water in which they were dissolved by adding 11.3 g of a 40% by weight aqueous solution of sodium hydroxide at 90°C. The aqueous solution was evaporated to dryness and the solid material was pulverized to give 52.0 g of a powdery sodium salt of the sulfonation product, which was soluble in water.

Into the thus coated and dried polymerization reactor were introduced 200 kg of water, 100 kg of styrene, 1 kg of calcium phosphate, 10 g of sodium dodecylbenzene sulfonate and 20 g of MPC and the polymerization of styrene was carried out under agitation at 60°C for 5 hours.

After completion of the polymerization reaction in each of the experiments, the emulsion of polystyrene was discharged out of the reactor and the amount of polymer scale deposition on the reactor walls was examined to give the results shown in Table 3.

TABLE 3

| Experiment No. | Coating composition | | | Amount of scale deposition, $g/m^2$ |
| --- | --- | --- | --- | --- |
| | Component I | Component II, colloidal | (I)/(II) weight ratio | |
| 59 | None | None | — | 280 |
| 60 | None | Silicic acid | 0/100 | 280 |
| 61 | C.I. Acid Black 2 | Silicic acid | 100/20 | 10 |
| 62 | C.I. Acid Black 2 | Barium sulfate | 100/20 | 20 |
| 63 | C.I. Direct Blue 116 | Sulfur | 100/10 | 14 |
| 64 | C.I. Acid Violet 78 | Stannic acid | 100/200 | 12 |
| 65 | C.I. Direct Blue 71 | Molybdenum oxide | 100/20 | 15 |
| 66 | (See text) | Iron (III) hydroxide | 100/100 | 10 |
| 67 | Sodium polystyrene-sulfonate | Aluminum hydroxide | 100/20 | 25 |

Example 4. (Experiments No. 68 to No. 84)

A stainless steel-made polymerization reactor of 100 liter capacity was coated on the surfaces of the inner walls and the stirrer with an aqueous coating composition containing the components I, II and III indicated in Table 4 below as prepared by dissolving these components in water in a total concentration of 0.5% by weight followed by the admixture of isobutyl alcohol to give a concentration of 10% by weight in the final solution and the coated surfaces were dried by heating at 90°C for 10 minutes followed by washing with water. The coating amount was 0.1 $g/m^2$ as dried.

Polymerization runs were undertaken in the thus coated and dried polymerization reactor in the same manner as in Example 2 and the amount of the polymer scale deposition on the reactor walls was examined after completion of the run to give the results shown in Table 4.

Example 5. (Experiments No. 85 to No. 90)

A stainless steel-made polymerization reactor of 500 liter capacity equipped with a stirrer was coated on the surfaces of the inner walls and the stirrer with an aqueous coating composition containing the components I, II and III indicated in Table 4 in a total concentration of 0.5% by weight as prepared by first dissolving the components I and II followed by the addition of the component III dissolved in a small volume of methyl alcohol and the coated surfaces were dried by heating at 60°C for 30 minutes followed by washing with water. The coating amount was 0.1 $g/m^2$ as dried.

Polymerization runs were undertaken in the thus coated and dried polymerization reactor in the same manner as in Example 3 and the amount of the polymer scale deposition on the reactor walls was examined after completion of each of the runs to give the results shown in Table 4.

TABLE 4

| Experiment No. | Coating composition | | | | Amount of scale deposition, $g/m^2$ |
|---|---|---|---|---|---|
| | Component I | Component II, colloidal | Component III | (I)/(II)/(III) weight ratio | |
| 68 | None | None | None | — | 1800 |
| 69 | C.I. Direct Yellow 1 | Barium sulfate | C.I. Basic Blue 24 | 100/300/20 | 30 |
| 70 | C.I. Acid Red 52 | Aluminum hydroxide | C.I. Basic Blue 26 | 100/40/15 | 20 |
| 71 | C.I. Acid Black 2 | Silicic acid | C.I. Basic Blue 9 | 100/100/20 | 5 |
| 72 | C.I. Acid Black 2 | Iron (III) hydroxide | C.I. Basic Orange 14 | 100/150/20 | 2 |
| 73 | C.I. Acid Black 2 | Sulfur | C.I. Basic Orange 15 | 100/50/30 | 3 |
| 74 | C.I. Direct Blue 106 | Iron (III) hydroxide | C.I. Basic Orange 2 | 100/100/35 | 7 |
| 75 | C.I. Acid Blue 116 | Silver | C.I. Basic Brown 1 | 100/20/40 | 15 |
| 76 | C.I. Direct Black 38 | Stannic acid | C.I. Basic Blue 12 | 100/300/17 | 20 |
| 77 | C.I. Acid Blue 158 | Molybdenum oxide | C.I. Basic Yellow 1 | 100/200/20 | 10 |
| 78 | C.I. Direct Blue 78 | Lithium silicate | C.I. Basic Red 12 | 100/100/23 | 10 |
| 79 | Sodium alginate | Barium sulfate | C.I. Basic Red 2 | 100/100/50 | 20 |
| 80 | Sodium polyacrylate | Iron (III) hydroxide | 4-Aminoresorcine hydrochloride | 100/50/20 | 30 |
| 81 | Sodium polystyrene-sulfonate | Silicic acid | C.I. Basic Blue 24 | 100/300/20 | 40 |

TABLE 4 (Continued)

| Experiment No. | Coating composition | | | | Amount of scale deposition, $g/m^2$ |
|---|---|---|---|---|---|
| | Component I | Component II, colloidal | Component III | (I)/(II)/(III) weight ratio | |
| 82 | C.I. Acid Violet 78 | Vanadium pentoxide | Aniline hydrochloride | 100/50/15 | 14 |
| 83 | C.I. Direct Blue 71 | Silicic acid | Polyvinylamine hydrochloride | 100/350/30 | 18 |
| 84 | Sodium benzoate | Iron (III) hydroxide | 2,4-Diaminophenol hydrochloride | 100/100/20 | 45 |
| 85 | None | None | None | — | 280 |
| 86 | C.I. Acid Blue 116 | Barium sulfate | C.I. Basic Orange 14 | 100/100/18 | 5 |
| 87 | C.I. Acid Black 2 | Silicic acid | C.I. Solvent Black 5 | 100/200/40 | 1 |
| 88 | C.I. Acid Black 2 | Sulfur | C.I. Solvent Black 3 | 100/300/30 | 3 |
| 89 | C.I. Acid Black 2 | Iron (III) hydroxide | C.I. Basic Blue 24 | 100/250/20 | 2 |
| 90 | C.I. Direct Black 38 | Vanadium pentoxide | C.I. Solvent Blue 73 | 100/400/15 | 6 |

**Claims**

1. A method for preventing deposition of polymer scale on the surfaces of a polymerization reactor coming into contact with the monomer in the polymerization of an ethylenically unsaturated monomer which comprises coating the surface with an aqueous coating composition comprising

(I) at least one compound selected from the class consisting of

(Ia) organic dyes of sulfonic acid type or carboxylic acid type in the form of an alkali metal salt or an ammonium salt,

(Ib) alkali metal salts or ammonium salts of organic sulfonic acids or carboxylic acids having at least one pair of conjugated double bonds in a molecule,

(Ic) alkali metal salts or ammonium salts of the sulfonated products obtained by the sulfonation of a condensation product of an aromatic amine compound or a co-condensation product of an aromatic amine compound and an aromatic nitro compound, and

(Id) anionic polymeric electrolyte compounds, and

(II) an aqueous colloidal dispersion having a particle size distribution of 1 to 500 nm of any inorganic material lending itself to such a particle size distribution,

and drying the thus coated surface prior to the introduction of the polymerization mixture into the polymerization reactor.

2. The method as claimed in claim 1 wherein the aqueous coating composition further comprises

(III) at least one compound having reactivity with the component (I) in the aqueous coating composition selected from the class consisting of

(IIIa) organic dyes,

(IIIb) organic compounds having at least one pair of conjugated double bonds in a molecule, and

(IIIc) cationic polymeric electrolyte compounds.

3. The method as claimed in claim 1 wherein the aqueous coating composition further comprises

(IV) a monohydric alcohol having from 3 to 6 carbon atoms per molecule.

4. The method as claimed in claim 1 wherein the component (Ib) is an alkali metal salt or an ammonium salt of an organic acid selected from the class consisting of α-naphthalene sulfonic acid, anthraquinone sulfonic acid, metanilic acid, cyclohexane sulfonic acid, dodecylbenzene sulfonic acid, p-toluene sulfonic acid, abietic acid, isonicotinic acid, benzoic acid, phenyl glycine and 3-hydroxy-2-naphthoic acid.

5. The method as claimed in claim 2 wherein the component (I) is a compound selected from the compounds belonging to the class of (Ia) and the component (III) is a compound selected from the compounds belonging to the class of (IIIa).

6. The method as claimed in claim 1 wherein the cocondensation product of an aromatic amine compound and an aromatic nitro compound is prepared by the cocondensation of from 0.15 to 0.50 mole of the aromatic nitro compound with 1 mole of the aromatic amine compound.

7. The method as claimed in claim 1 wherein the inorganic material in the aqueous colloidal dispersion as the component (II) is selected from the class consisting of gold, silver, sulfur, iron (III) hydroxide, stannic acid, silicic acid, manganese dioxide, molybdenum oxide, barium sulfate, vanadium pentoxide, aluminum hydroxide and lithium silicate.

8. The method as claimed in claim 1 wherein the anionic polymeric electrolyte compound as the component (Id) is selected from the class consisting of sulfomethylation products of polyacrylamide, sodium polyacrylates, sodium alginates, sodium polymethacrylates, sodium polystyrenesulfonates and alkali metal or ammonium salts of carboxymethyl cellulose.

9. The method as claimed in claim 2 wherein the component (III) is a compound belonging to the class of (IIIb) selected from the class consisting of aniline hydrochloride, 3-(2-aminoethyl) pyrocatechol hydrochloride, 2-amino-4-methyl thiazole hydrochloride, 4-aminoresorcine hydrochloride, N-ethylaniline hydrochloride, 2-chloro-1,4-phenylene diamine hydrochloride, 2,4-diamino azobenzene hydrochloride, 2,4-diamino phenol hydrochloride, 2-amino resorcine hydrochloride, thiamine hydrochloride, N,N-diethyl aniline hydrochloride, p-toluidine hydrochloride and thionine hydrochloride.

10. The method as claimed in claim 5 wherein the aqueous coating composition contains the component (II) and component (IIIa) in amounts from 0.1 to 1000 parts by weight and from 5 to 100 parts by weight, respectively, per 100 parts by weight of the component (Ia).

11. The method as claimed in claim 3 wherein the aqueous coating composition contains the monohydric alcohol having from 3 to 6 carbon atoms per molecule in a concentration from 1 to 20% by weight.

12. The method as claimed in claim 1 wherein the surface is coated with the aqueous coating composition in a coating amount of at least 0.001 $g/m^2$ as dried.

**Patentansprüche**

1. Verfahren zur Verhinderung der Ablagerung von polymeren Stoffen auf den Wänden von Polymerisationsreaktoren, die während der Polymerisation mit den zu polymerisierenden Olefinmonomeren in Berührung kommen, mit folgenden Verfahrensschritten:

(i) Überziehen der Reaktorwand mit einem wässrigen Gemisch zur Herstellung einer Schutzschicht, wobei das Gemisch zur Herstellung einer Schutzschicht sowohl mindestens eine Verbindung (I) aus der folgenden Verbindungsklasse enthält:

(Ia) Alkalimetallsalze oder Ammoniumsalze von organischen Farbstoffen mit mindestens einer Sulfonsäuregruppe oder einer Carbonsäuregruppe,

(Ib) Alkalimetallsalze oder Ammoniumsalze von organischen Sulfonsäuren oder Carbonsäuren, die mindestens ein Paar konjugierter Doppelbindungen im Molekül aufweisen,

(Ic) Alkalimetallsalze oder Ammoniumsalze von sulfonierten Reaktionsprodukten, die durch Sulfonierung von aus aromatischen Aminen gewonnenen Kondensationsprodukten oder durch Sulfonierung von aus aromatischen Aminen und aromatischen Nitroverbindungen gewonnenen gemischten Kondensationsprodukten erhältlich sind, und

(Id) anionische polymere Elektrolyte, als auch

(II) eine aus Wasser und einem anorganischen Stoff bestehende kolloide Suspension, wobei der anorganische Stoff selbst und in der Suspension einen Korngrößenbereich von 1 bis 500 nm umfasst;

(ii) Trocknen der so überzogenen Reaktorwand vor dem Einfüllen des Polymerisationsgemisches in den Polymerisationsreaktor.

2. Verfahren nach Anspruch 1, dadurch gekennzeichnet, daß das wässrige Gemisch zur Herstellung einer Schutzschicht weiter mindestens eine, im Hinblick auf die Komponente (I) reaktive Verbindung (III) in dem wässrigen Gemisch enthält, wobei die Verbindung (III) aus einer der folgenden Verbindungsklassen gewählt wird:

(IIIa) Organische Farbstoffe,

(IIIb) Organische Verbindungen mit mindestens einem Paar konjugierter Doppelbindungen im Molekül, und

(IIIc) kationische polymere Elektrolyte.

3. Verfahren nach Anspruch 1, dadurch gekennzeichnet, daß das wässrige Gemisch zur Herstellung einer Schutzschicht weiter einen einwertigen Alkohol mit 3 bis 6 Kohlenstoffatomen im Molekül enthält.

4. Verfahren nach Anspruch 1, dadurch gekennzeichnet, daß die Komponente (Ib) ein Alkalimetallsalz oder Ammoniumsalz einer organischen Säure aus der folgenden Gruppe von organischen Säuren ist: α-Naphthalinsulfonsäure, Antrachinonsulfonsäure, Metanilsäure, Cyclohexansulfonsäure, Dodecylbenzolsulfonsäure, p-Toluolsulfonsäure, Abietinsäure, Isonikotinsäure, Benzoesäure, Phenylglycin und 3-Hydroxy-2-naphthalincarbonsäure.

5. Verfahren nach Anspruch 2, dadurch gekennzeichnet, daß die Komponente (I) zu den Verbindungen des Typs (Ia) und die Komponente (III) zu Verbindungen des Typs (IIIa) gehört.

6. Verfahren nach Anspruch 1, dadurch gekennzeichnet, daß das gemischte Kondensationsprodukt aus aromatischem Amin und aromatischer Nitroverbindung durch Kondensation von 0,15 bis 0,50 mol der aromatischen Nitroverbindung und 1 mol des aromatischen Amins erhältlich ist.

7. Verfahren nach Anspruch 1, dadurch gekennzeichnet, daß der anorganische Stoff der wässrigen kolloiden Suspension als der Komponente (II) Gold, Silber, Schwefel, Eisen(III)-hydroxid, Zinnsäure, Kieselsäure, Mangandioxid, Molybdänoxid, Bariumsulfat, Vanadiumpentoxid, Aluminiumhydroxid oder Lithiumsilicat ist.

8. Verfahren nach Anspruch 1, dadurch gekennzeichnet, daß der anionische polymere Elektrolyt als Komponente (Id) ein Reaktionsprodukt der Sulfomethylierung von Polyacrylamid, Natriumpolyacrylat, Natriumalginat, Natriumpolymethacrylat, Natriumpolystyrolsulfonat oder ein Alkalimetall bzw. Ammoniumsalz der Carboxymethylcellulose ist.

9. Verfahren nach Anspruch 2, dadurch gekennzeichnet, daß die Komponente (III) eine Verbindung vom Typ (IIIb) ist und Anilinhydrochlorid, 3-(2-Aminoethyl)-brenzcatechinhydrochlorid, 2-Amino-4-methyldiazolhydrochlorid, 1-Aminoresorzinhydrochlorid, N-Ethylanilinhydrochlorid, 2-Chloro-1,4-phenylendiaminhydrochlorid, 2,4-Diaminoazobenzolhydrochlorid, 2,4-Diaminophenolhydrochlorid, 2-Aminoresorzinhydrochlorid, Thiaminhydrochlorid, N,N-Diethylanilinhydrochlorid, p-Toluidinhydrochlorid und Thioninhydrochlorid ist.

10. Verfahren nach Anspruch 5, dadurch gekennzeichnet, daß das wässrige Gemisch zur Herstellung einer Schutzschicht die Komponente (II) und Komponente (IIIa) in Mengen von 0,1 bis 1000 Gew.-Teile bzw. 5 bis 100 Gew.-Teile bezogen auf 100 Gew.-Teile der Komponente (Ia) enthält.

11. Verfahren nach Anspruch 3, dadurch gekennzeichnet, daß das wässrige Gemisch zur Herstellung einer Schutzschicht den einwertigen Alkohol mit 3 bis 6 Kohlenstoffatomen pro Molekül in einer Konzentration von 1 bis 20 Gew.-% enthält.

12. Verfahren nach Anspruch 1, dadurch gekennzeichnet, daß die Reaktorwand in der Weise mit dem wässrigen Gemisch zur Herstellung einer Schutzschicht behandelt wird, daß nach Trocknung mindestens 0,001 $g/m^2$ Schutzschicht auf der Reaktorwand abgeschieden sind.

**Revendications**

1. Procédé pour empêcher la formation de dépôts de polymère sur les surfaces d'un réacteur de polymérisation venant en contact avec le monomère au cours de la polymérisation d'un monomère éthyléniquement insaturé, dans lequel on applique sur la surface une composition de revêtement aqueuse comprenant

(I) au moins un composé choisi dans le groupe comprenant

(Ia) les colorants organiques du type acide sulfonique ou du type acide carboxylique sous la forme d'un sel d'un métal alcalin ou d'un sel d'ammonium,

(Ib) les sels de métaux alcalins ou les sels d'ammonium d'acides sulfoniques organiques ou d'acides carboxyliques organiques ayant au moins une paire de doubles liaisons conjuguées dans une molécule,

(Ic) les sels de métaux alcalins ou d'ammonium des produits sulfonés obtenus par sulfonation d'un produit de condensation d'une amine aromatique ou d'un produit de cocondensation d'une amine aromatique et d'un dérivé nitré aromatique, et

(Id) les électrolytes polymères anioniques, et

(II) une dispersion aqueuse colloïdale dont la répartition granulométrique est comprise entre 1 et 500 nm d'un produit minéral quelconque permettant l'obtention d'une telle répartition granulométrique, puis on sèche la surface ainsi revêtue avant l'introduction du mélange polymérisable dans le réacteur de polymérisation.

2. Procédé selon la revendication 1 dans lequel la composition de revêtement aqueuse comprend en outre,

(III) au moins un composé susceptible de réagir avec le composant (I) dans la composition de revêtement aqueuse choisi dans le groupe formé par

(IIIa) les colorants organiques

(IIIb) les composés organiques ayant au moins une paire de doubles liaisons conjuguées dans une molécule, et

(IIIc) les électrolytes polymères cationiques.

3. Procédé selon la revendication 1 dans lequel la composition de revêtement aqueuse comprend en outre (IV) un alcool monohydrique ayant de 3 à 6 atomes de carbone par molécule.

4. Procédé selon la revendication 1 dans lequel le composant (Ib) est un sel d'un métal alcalin ou d'ammonium d'un acide organique choisi parmi le groupe comprenant les acides α-naphtalènesulfonique, anthraquinonesulfonique, métanilique, cyclohexanesulfonique, dodécylbenzènesulfonique, p-toluènesulfonique, abiétique, isonicotinique, benzoïque, la phénylglycine, et l'acide 3-hydroxy-2-naphtoïque.

5. Procédé selon la revendication 2 dans lequel le composant (I) est un composé choisi parmi les composés du groupe (Ia) et le composant (III) est un composé choisi parmi les composés du groupe (IIIa).

6. Procédé selon la revendication 1 dans lequel le produit de cocondensation d'une amine aromatique et d'un dérivé nitré aromatique est préparé par cocondensation d'une quantité comprise entre 0,15 et 0,50 mole du dérivé nitré aromatique avec 1 mole de l'amine aromatique.

7. Procédé selon la revendication 1 dans lequel le produit minéral dans la dispersion aqueuse colloïdale en tant que composant (II) est choisi dans le groupe comprenant l'or, l'argent, le soufre, l'hydroxyde de fer (III), l'acide stannique, l'acide silicique, le bioxyde de manganèse, l'oxyde de molybdène, le sulfate de baryum, le pentoxyde de vanadium, l'hydroxyde d'aluminium et le silicate de lithium.

8. Procédé selon la revendication 1 dans lequel l'électrolyte polymère anionique en tant que composant (Id) est choisi dans le groupe comprenant les produits de sulfométhylation du polyacrylamide, des polyacrylates de sodium, des alginates de sodium, des polyméthacrylates de sodium, de polystyrènesulfonates de sodium et des sels de métaux alcalins ou d'ammonium de la carboxyméthylcellulose.

9. Procédé selon la revendication 2 dans lequel le composant (III) est un composé appartenant au groupe (IIIb) choisi dans le groupe comprenant les chlorhydrates d'aniline, de 3-(2-amino)éthyl)pyrocatéchol, du 2-amino-4-méthylthiazole, de la 4-aminorésorcine, de la N-éthylaniline, de la 2-chloro-1,4-phénylènediamine, du 2,4-diaminoazobenzène, du 2,4-diaminophénol, de la 2-aminorésorcine, de la thiamine, de la N,N-diéthyl-aniline, de la p-toluidine et de la thionine.

10. Procédé selon la revendication 5 dans lequel la composition de revêtement aqueuse contient le composant (II) et le composant (IIIa) en des quantités comprises entre 0,1 et 1000 parties en poids et entre 5 et 100 parties en poids respectivement, pour 100 parties en poids du composant (Ia).

11. Procédé selon la revendication 3 dans lequel la composition de revêtement aqueuse contient l'alcool monohydrique ayant entre 3 et 6 atomes de carbone par molécule en une concentration comprise entre 1 et 20% en poids.

12. Procédé selon la revendication 1 dans lequel la surface est revêtue à l'aide d'une composition de revêtement aqueuse donnant un revêtement dont le poids après séchage s'élève à au moins 0,001 $g/m^2$.